# EUROPEAN PATENT APPLICATION

(11) **EP 4 843 837 A1**
(43) Date of publication of application: **25.11.2026**
(21) Application number: 25178313.0
(22) Date of filing: 22.05.2025
(51) Int. Cl.: B60R 13/00, G09F 21/04, E05B 81/50, H01H 13/06

(54) **DISPLAY ELEMENT FOR A VEHICLE BODYWORK WITH A GASKET**

(71) Applicant: Minebea Mitsumi Inc., Kitasaku-gun, Nagano 389-0293 (JP)
(72) Inventor: CIUFFARELLA, Barbara, 10044 Pianezza (IT); PEYNOT, Thomas, 10044 PIANEZZA (IT); SHARMA, Jatin, 10044 PIANEZZA (IT)
(74) Representative: Germain Maureau

(57) **Abstract**

The disclosure concerns a Display element (3) for a vehicle bodywork (2) comprising:
- a holder (4) configured to be fastened to the vehicle bodywork (2);
- a display part (6) fastened to the holder (4);
- a recess (41) formed between the holder (4) and the display part (6);
- an electronic component (5);
characterized in that the display element (3) comprises a gasket (7) located inside the recess (41), the gasket (7) being configured such that a sealing chamber (8) is formed inside the recess (41), the electronic component (5) being located inside the sealing chamber (8).

## Description

### TECHNICAL FIELD

The present disclosure concerns a display element for a vehicle bodywork, for example a logo holder forming a push-button for commanding the opening of a vehicle's trunk.

### BACKGROUND

Vehicles, as for example cars, generally comprise a logo of the vehicle manufacturer fastened on the vehicle bodywork. For vehicles like cars, logos are generally installed at the front and at the rear of the vehicle.

In order to highlights the logo of the manufacturer, its known to use logo with integrated lights, or integrated sensor like a logo with a tactile surface.

It is also known to install equipment of the vehicle, as parking camera, inside the logo in order to make it more discreet.

However, the integration of electronic components inside the logo has created the risk of introduction of water or dust inside the pushbutton.

Therefore, there is a need for solution for mitigating the risk of introduction of water and dust inside the logo.

### SUMMARY

The invention concerns a display element for a vehicle bodywork comprising:
- a holder configured to be fastened to the vehicle bodywork;
- a display part fastened to the holder;
- a recess formed between the holder and the display part;
- an electronic component;
- a display part inserted in the recess over the electronic component;
characterized in that the display element comprises a gasket located inside the recess, the gasket being configured such that a sealing chamber is formed inside the recess, the electronic component being located inside the sealing chamber.

Such display element offers a protection against water and dust for the electronic component located inside the sealing chamber.

According to an advantageous feature, the gasket comprises a fixation element and a sealing element, the fixation element comprising fixation means, the holder and/or the display part comprising complementary fixation means, the fixation means of the fixation element cooperating with the complementary fixation means formed on the holder and/or on the display part for fastening the gasket inside the recess, the sealing element comprising at least one sealing lip pressed against the holder or the display part. Such feature offers a simple solution for fastening the gasket and ensuring the sealing.

According to an advantageous feature, the sealing element comprises a first sealing lip being pressed against the holder, and/or a second sealing lip being pressed against the display part. Such feature increases the sealing of gasket.

According to an advantageous feature, the sealing element is overmolded over the fixation element. Such feature is a simple solution for manufacturing the gasket.

According to an advantageous feature, the sealing element is located at a first end of the fixation element, wherein the fixation means are located at a second end of the fixation element, the second end of the fixation element being opposed to the first end of the fixation element. Such feature offers a simple structure for the gasket.

According to an advantageous feature, the fixation element of the gasket is fastened to the holder and/or the display part by clipping. Such feature offers a simple solution for fastening the gasket, that is potentially easy to remove in case of disassembly of the display element.

According to an advantageous feature, the fixation means of the fixation element of the gasket comprise a clipping arm comprising an engagement hook, and the complementary fixation means formed on the holder and/or on the display part comprise a clipping groove receiving the engagement hook. Such feature offers a simple solution for the clipping of the gasket.

According to an advantageous feature, the electronic component comprises a switch, and wherein the display part is mounted mobile in the recess between an activation position where the display part activates the switch and a rest position where the display part does not activate the switch. Such feature enables display element to activate function by activation or deactivation of the switch, for example opening of an element of the bodywork.

According to an advantageous feature, the holder comprises an inside wall and a base wall, the inside wall protruding in the recess from the base wall and delimiting a first closed surface on the base wall, the display part comprising a sealing wall and a top wall, the sealing wall protruding in the recess from the top wall and delimiting a second closed surface on the top wall, the first closed surface and the second closed surface having complementary shapes such that the inside wall and the sealing wall fit together, the gasket being located between the inside wall and the sealing wall. Such feature improves the sealing of the sealing chamber.

According to an advantageous feature, the first sealing lip is pressed against the inside wall of the holder, and/or the second sealing lip being pressed against the sealing wall of the display part. Such feature improves the sealing of the sealing chamber.

According to an advantageous feature, the inside wall of the holder and/or the sealing wall of the display part slides along the gasket when the display part moves between activation position and rest position. Such feature improves the sealing of the sealing chamber while enabling movements of the display part.

According to an advantageous feature, the electronic component comprises a light emitting component and/or a sensor, for example a camera and/or a sensor for detecting a hand of a user touching and/or approaching the display part. Such feature adds functions for the vehicle that are hidden inside the display element, and enables to highlight the display element if needed.

According to an advantageous feature, the holder comprises a connecting hole opening inside the sealing chamber, a connecting wire connected to the electronic component passing through the connecting hole. Such feature enables an easy connection for the electronic component that is protected against water and dust.

According to another aspect, the invention concerns a bodywork of a vehicle to which a display element according to any of the preceding features is fastened.

According to an advantageous feature, the display element is located on a tailgate of the bodywork, and/or on a door of the bodywork, and/or on a hood of the bodywork.

According to another aspect, the invention concerns a vehicle comprising a bodywork to which a display element according to any of the preceding features is fastened.

Further advantages and advantageous features are disclosed in the following description.

### BRIEF DESCRIPTION OF THE DRAWINGS

A possible embodiment of the door handle apparatus will now be described by way of non-limiting examples with reference to the appended figures:
Figure 1 is a rear view of a vehicle comprising a display element;
Figure 2 is an isolated view of a gasket of the display element;
Figure 3 is a cross-sectional view of the display element in which a gasket and a display part are not installed;
Figure 4 is a cross-sectional view of the display element of figure 3 in which the gasket is installed and the display part is not installed.
Figure 5 is a cross-sectional view of the display element of figures 2 and 3 in which the gasket and the display part is installed, the display part being in rest position.
Figure 6 is a cross-sectional view of the display element of figures 2 and 3 in which the gasket and the display part is installed, the display part being in activation position.
Figure 7 is a cross-sectional view of a display element according to another embodiment in which the gasket is fastened to the display part.

### DETAILED DESCRIPTION OF EXAMPLE EMBODIMENTS OF THE INVENTION

In the following description, positioning terms such as front, back, left, right, top, bottom, etc., refer to an orthogonal basis comprising the following three directions: front-back, left-right and top-bottom. In this description, theses three directions correspond to the usual directions attached to the motor vehicle. However, in other embodiments of the invention, the directions front-back, left-right and top-bottom could be any set of arbitrary directions forming an orthogonal basis.

A vehicle 1 comprises a bodywork 2, the bodywork 2 being for example formed by the external shell of the vehicle 1. The bodywork 2 is for example in metal, or in composite material with fiber-reinforced polymer matrix, or in plastic material. The bodywork 2 can also be made with parts made several materials, for example with parts in metal and/or parts composite material with fiber-reinforced polymer matrix, and/or parts in plastic material.

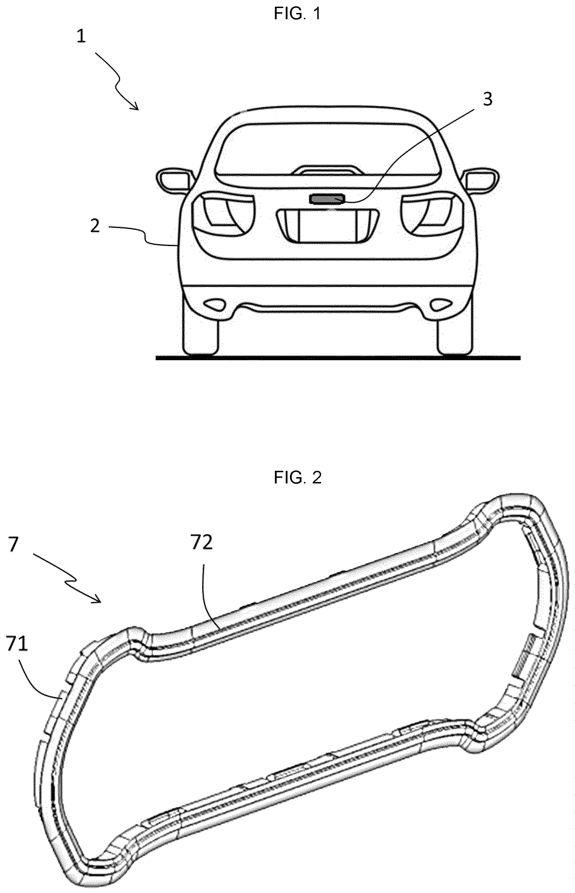

A display element 3 is fastened to the bodywork 2 of the vehicle. The display element 3 is for example fastened to an external surface of the bodywork 2. In the embodiment presented in figure 1, the display element 3 is fastened to a tailgate of the bodywork 2. However, the display element 3 can be placed in other position on the bodywork 2, for example at the side or at the front. The display element 3 can be placed, for example, on a hood of the bodywork 2. Moreover, more than one display element 3 can be installed on the bodywork 2. The display element 3 can be placed, for example, on one or several doors of the bodywork 2.

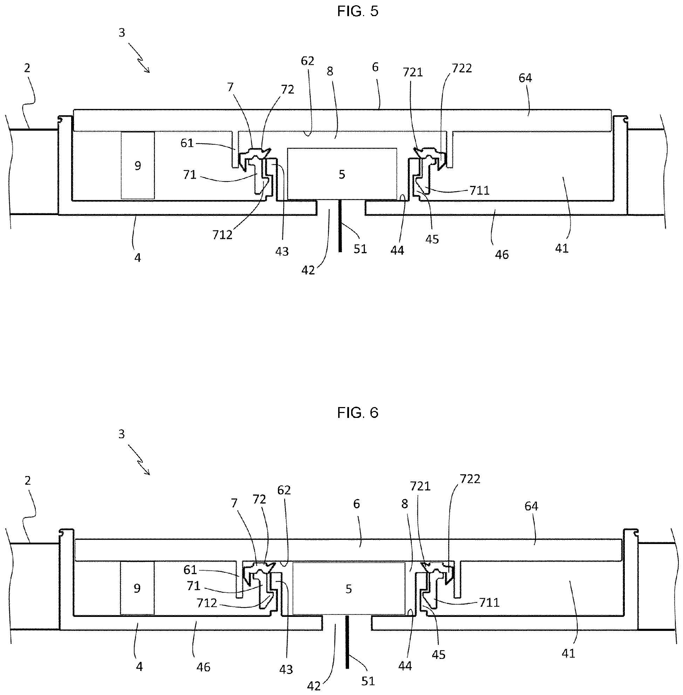

As it can be seen in figures 5 to 7, the display element 3 comprises:
- a holder 4 configured to be fastened to the vehicle bodywork 2;
- a display part 6 fastened to the holder 4;
- a recess 41 formed between the holder and the display part 6;
- an electronic component 5;
- a gasket 7 located inside the recess 41, the gasket 7 being configured such that a sealing chamber 8 is formed inside the recess 41, the electronic component 5 being located inside the sealing chamber 8.

The gasket 7 protects the electronic component 5 by blocking the introduction of water and dust inside the sealing chamber 8.

The holder 4 is fastened to the vehicle bodywork 2 in order to receive the other parts of the display element 3 and ensure their fixation to the bodywork 2. The holder 4 can be fastened to the bodywork 2 by riveting, or screwing, or by crimping, or by welding, or by gluing, or clipping it to the bodywork 2. The technic used for fastening the holder 4 to the bodywork 2 is adapted in function of the material of the holder 4 and the material of the bodywork 4. For example, the holder 4 is in metal or in plastic material.

The holder 4 comprises a connecting hole 42 opening in the sealing chamber 8 for enabling the passage of connecting wires 51 connected to the electronic component 5 in order to connect the electronic component 5 to other element of the vehicle 1, for example a command unit controlling the opening of the trunk.

Several options are possible for the electronic component 5. The electronic component 5 can comprises one or several of the following elements:
- a switch, for example for commanding the opening of an element of the bodywork 2 as a door or the trunk;
- a light emitting component, for example for highlighting the display part 6. The display part 6 can comprise can comprises one or several translucent zones such that the light emitted by the light-emitting component passes through the display part 6;
- a sensor. The sensor can be a camera, for example a parking camera, and the display part 6 can comprise a hole or a translucent zone for the camera. The sensor can also be a hand detection sensor for detecting when a hand of a user is near or touch the display part 6, the hand detection sensor for example comprises a capacitive sensor and/or a strain sensor.

The electronic component 5 can be part of an electronic circuit where a portion of the electronic circuit is located inside the sealing chamber 8, for example a switch, and/or a light emitting component, and/or a sensor, and another portion of the electronic circuit is located outside of the sealing chamber 8, for example the electronic circuit comprises a battery and/or a control unit located for example under the vehicle hood.

The display part 6 is mounted in the holder 4 such that it is visible from the outside of the bodywork 2. A logo of the vehicle manufacturer can, for example, be drawn on the display part 6. The display part 6 can be maintained in position in the holder with a slider (not represented here) inserted on the inside of the vehicle 1.

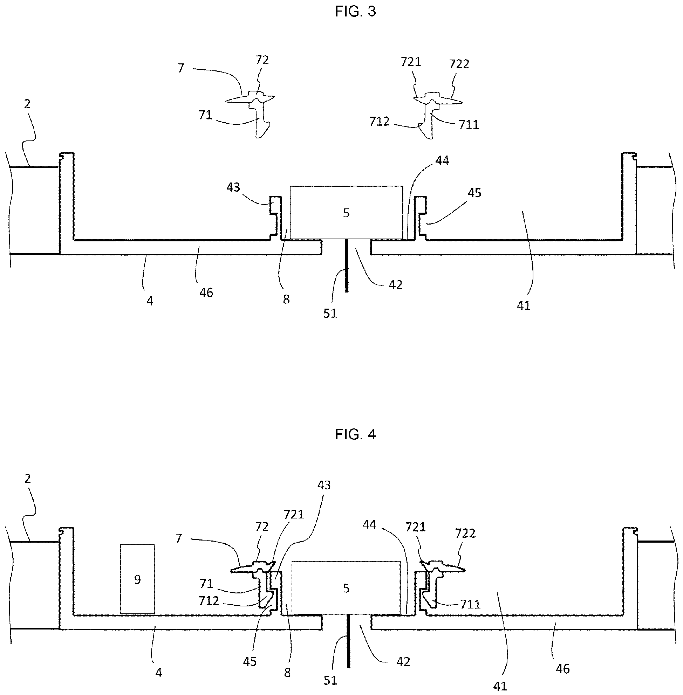

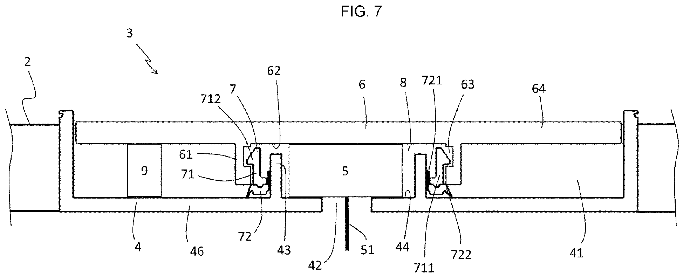

The gasket 7 can be made in two parts, a fixation element 71 intended for fastening the gasket 7 inside the recess 41, and sealing element 72 intended for forming a barrier preventing water and dust from entering inside the sealing chamber 8. The fixation element 71 comprises fixation means that cooperates with complementary fixation means formed on the holder 4 (figures 3-6) or on the display part (figure 7). 6. The sealing element 72 is located at a first end of the fixation element 71, the fixation means of the fixation element being located at a second end of said fixation element 71, the second end of the fixation element 71 being opposed to the first end of the fixation element 71. The sealing element 72 comprises at least one sealing lip 721, 722 that is pressed against the holder 4 or against the display part 6. Preferably, the sealing element 72 comprises two sealing lips 721, 722, a first sealing lip 721 pressed against the holder 4, and a second sealing lip 722 pressed against the display part 6. The first sealing lip 721 protrudes toward the interior of the sealing gasket 7, and the second sealing leap 722 protrudes toward the exterior of the sealing gasket 7.

The sealing chamber 8 is a space delimited by the holder 4 and the display part 6 that is protected by the gasket 7 against the introduction of water and dust. Thus, electronic component 5 is protected, and the risk of failure is lowered. The sealing chamber 8 comprises a bottom wall formed by the holder 4, a top wall formed by the display part 6, and a side wall connecting the top wall to the bottom wall. The side wall of the sealing chamber 8 separates said sealing chamber 8 from the rest of the recess 41. The holder 4 comprises an inside wall 43 and a base wall 46. The inside wall 43 protrudes in the recess 41 from the base wall 46. The inside wall 43 formes a portion of side wall of the sealing chamber 8. The inside wall 43 delimits a first closed surface 44 on the base wall 46 of the holder 4. The electronic component 5 is placed inside the first closed surface 44 of the holder. In order to form the rest of the side wall of the sealing chamber 8, the display part 6 comprises a top wall 64 and sealing wall 61 protruding in the recess 41 from the top wall 64. Sealing wall 61 delimits a second closed surface 62 on the top wall 64. The first closed surface 44 and the second closed surface 62 have complementary shapes such that the inside wall 43 and the sealing wall 61 fit together, and thus closing the sealing chamber 8. The gasket 7 is located between the inside wall 43 and the sealing wall 61, thus closing the only way for the introduction of water and dust inside the sealing chamber 8. The first sealing lip 721 is pressed against the inside wall 43, and the second sealing lip 722 is pressed against the sealing wall 722.

In the embodiments presented in the drawings, the inside wall 43 of the holder 4 fits inside the sealing wall 61 of the display part 6, but according to another variant it is the sealing wall 61 of the display part 6 that fits inside the inside wall 43 of the holder 4.

Preferably, the fixation element 71 of the sealing gasket is fastened to the holder 4 or the display element 6 by clipping. In order to ensure the clipping, the fixation means of the fixation element 71 comprise a clipping arm 711 presenting an engagement hook 712. The engagement hook is adapted for engaging a clipping groove 45, 63 that is formed in the inside wall 43 of the holder 4 (figures 3-6) or in the sealing wall 61 (figure 7). The retention hook 712 prevents unwanted separation between the gasket 7 and the holder 4 (figures 3-6) or the display element 6 (figure 7).

The gasket 7 can be manufactured by overmolding the sealing element 72 over the fixation element 71. The fixation element 71 and the sealing element 72 are made in different materials. The sealing element 72 is made in a material with a lower hardness than the material of the fixation element 71.

An assembling of the display element 3 is illustrated in figures 3 to 5. Figure 3 illustrates the step where the display part 6 is not installed in the recess 41 and the gasket 7 is not fastened inside the recess 41 around the inside wall 43. As it can be seen, none of the sealing lips 721, 722 of the sealing element 72 is compressed. Figure 4 illustrates the step where the gasket 7 is installed around the inside wall 43 of the holder 4 by clipping the engagement hook 712 in the clipping groove 45. As it can be see, the first sealing lip 721 is pressed against the inside wall 43 during the installation of the gasket 7. In the step of figure 4 the display part 6 is still not installed in order to keep the recess 41 open for the installation of the gasket 7. Figure 5 illustrates the step where the display part 6 is installed in the recess 41. The installation of the display part 6 is made by engaging the sealing wall 61 around both the inside wall 43 and the gasket 7. The second sealing lip 722 is pressed against the sealing wall 61 during installation of the display part 6.

According an advantageous variant of the invention, the display element 3, in addition to serving as an aesthetical element, is an activation element for activating a function of the vehicle, as for example a button or a handle. In the embodiment presented in the drawings, the display element 3 is a push-button. The display part 6 is mounted in the holder 4 so as to be able to move between several positions. In the case of a push-button, the display part 6 is able to translate in recess 41. In case of another activation element, for example a handle, the display part 6 can be able to rotate in the recess of the holder 4. The activation of the display element 3 can be used for example for opening a trunk, a hood, or a door of the vehicle 1.

In the case where the display element 3 is an activation element, the electronic component 5 can comprise a switch for commanding the activation of the desired function, for example the opening of an element of the bodywork 2. The display part 6 is mobile between a rest position (figure 5) where the switch in the electronic component 5 is not activated, and an activation position (figure 6) where the switch in the electronic component 5 is activated. The activation of the switch can be realized when the display part 6 touches the switch, the switch detecting when a contact occurs between itself and the display part 6. The activation of the switch can be realized when the distance between the display part 6 and the switch is less than a predetermined threshold, the switch measuring the distance between itself and the display part 6.

In the embodiments presented in the figures, the movement of the display part 6 from its rest position to its activation position is obtained by pressing said display part 6, the display element 3 being a push-button. When the display part 6 is pressed, said display part 6 slide in the recess 41. In the embodiment of figures 3-6, the sealing wall 61 slides along the second sealing lip 722 when the display part 6 moves, and in the embodiment of figure 7, the first sealing lip 721 slides along the inside wall 43 when the display part 6 moves.

The display element 3 can comprise a biasing element 9 that tends to maintain the display part 6 in its rest position. The biasing element 9 is for example a spring installed inside the recess 41. The biasing element 9 can be installed inside the recess 41 of the holder but outside of the sealing chamber 8. The biasing element 9 can also be installed inside the sealing chamber 8 and thus is also protected against water and dust.

It is to be understood that the present disclosure is not limited to the embodiments described above and illustrated in the drawings; rather, the skilled person will recognize that many changes and modifications may be made within the scope of the appended claims.

## Claims

1. Display element (3) for a vehicle bodywork (2) comprising:
- a holder (4) configured to be fastened to the vehicle bodywork (2);
- a display part (6) fastened to the holder (4);
- a recess (41) formed between the holder (4) and the display part (6);
- an electronic component (5);
**characterized in that** the display element (3) comprises a gasket (7) located inside the recess (41), the gasket (7) being configured such that a sealing chamber (8) is formed inside the recess (41), the electronic component (5) being located inside the sealing chamber (8).

2. The display element (3) according to claim 1, wherein the gasket (7) comprises a fixation element (71) and a sealing element (72), the fixation element (71) comprising fixation means (711, 712), the holder (4) and/or the display part (6) comprising complementary fixation means (45, 63), the fixation means (711, 712) of the fixation element (71) cooperating with the complementary fixation means (45, 63) formed on the holder (4) and/or on the display part (6) for fastening the gasket (7) inside the recess (41), the sealing element (72) comprising at least one sealing lip (721, 722) pressed against the holder (4) or the display part (6).

3. The display element (3) according to claim 2, wherein the sealing element (72) comprises a first sealing lip (721) being pressed against the holder (4), and/or a second sealing lip (722) being pressed against the display part (6).

4. The display element (3) according to claim 2 or claim 3, wherein the sealing element (72) is overmolded over the fixation element (71).

5. The display element (3) according to any of claim 2 to claim 4, wherein the sealing element (72) is located at a first end of the fixation element (71), wherein the fixation means are located at a second end of the fixation element (71), the second end of the fixation element (71) being opposed to the first end of the fixation element (71).

6. The display element (3) according to any of claim 2 to claim 5, wherein the fixation element (71) of the gasket (7) is fastened to the holder (4) and/or the display part (6) by clipping.

7. The display element (3) according to claim 6, wherein the fixation means of the fixation element (71) of the gasket (7) comprise a clipping arm (711) comprising an engagement hook (712), and the complementary fixation means formed on the holder (4) and/or on the display part (6) comprise a clipping groove (45, 63) receiving the engagement hook (712).

8. The display element (3) according to any of claim 1 to claim 7, wherein the electronic component (5) comprises a switch, and wherein the display part (6) is mounted mobile in the recess (41) between an activation position where the display part (6) activates the switch and a rest position where the display part (6) does not activate the switch.

9. The display element (3) according to any of claim 1 to claim 8, wherein the holder (4) comprises an inside wall (43) and a base wall (46), the inside wall (43) protruding in the recess (41) from the base wall (46) and delimiting a first closed surface (44) on the base wall (46), the display part (6) comprising a sealing wall (61) and a top wall (64), the sealing wall (61) protruding in the recess (41) from the top wall (64) and delimiting a second closed surface (62) on the top wall (64), the first closed surface (44) and the second closed surface (62) having complementary shapes such that the inside wall (43) and the sealing wall (61) fit together, the gasket (7) being located between the inside wall (43) and the sealing wall (61).

10. The display element (3) according to claim 9 in combination with claim 3, wherein the first sealing lip (721) is pressed against the inside wall (43) of the holder (4), and/or the second sealing lip (722) being pressed against the sealing wall (61) of the display part (6).

11. The display element (3) according to claim 9 or claim 10, wherein the inside wall (43) of the holder (4) and/or the sealing wall (61) of the display part (6) slides along the gasket (7) when the display part (6) moves between activation position and rest position.

12. The display element (3) according to any of claims 1 to 11, wherein the electronic component (5) comprises a light emitting component and/or a sensor, for example a camera and/or a sensor for detecting a hand of a user touching and/or approaching the display part (6).

13. The display element (3) according to claim 12, wherein the holder (4) comprises a connecting hole (42) opening in the sealing chamber (8), a connecting wire (51) connected to the electronic component (5) passing through the connecting hole (42).

14. Bodywork (2) of a vehicle (1) to which a display element (3) according to any of claim 1 to claim 13 is fastened.

15. Vehicle (1) comprising a bodywork (2) to which a display element (3) according to any of claim 1 to 13 is fastened.
